# EUROPÄISCHE PATENTSCHRIFT

(11) **EP 0 754 887 B1**
(45) Veröffentlichungstag und Bekanntmachung des Hinweises auf die Patenterteilung: **03.12.1997**
(21) Anmeldenummer: 96111067.3
(22) Anmeldetag: 10.07.1996
(51) Int. Cl.: F16H 59/10, F16H 61/22

(54) **Vorrichtung zur Blockierung des Wählhebels in einem Kraftfahrzeug mit automatischem Getriebe**
Blocking device for selector lever of automatic transmission equipped motor vehicle
Dispositif de verrouillage du levier de sélection d'un véhicule automobile équipé d'une transmission automatique

(30) Priorität: 17.07.1995 DE 19526058
(43) Veröffentlichungstag der Anmeldung: 22.01.1997
(73) Patentinhaber: LEMFOERDER METALLWAREN AG., D-49441 Lemförde (DE)
(72) Erfinder: Ersoy, Metin, Dr. Ing., 65396 Walluf (DE)

(56) Entgegenhaltungen:
- WO-A-93/24771
- DE-A- 3 617 256
- DE-A- 4 118 519
- DE-C- 4 305 015
- FR-A- 2 298 827
- US-A- 3 106 198

## Beschreibung

Die Erfindung bezieht sich auf eine Vorrichtung zur Blockierung des Wählhebels in einem Kraftfahrzeug mit automatischem Getriebe nach dem Oberbegriff des Patentanspruches 1.

Es entspricht einer allgemeinen Vorschrift, daß der Wählhebel für das Schalten eines automatischen Getriebes in einem Kraftfahrzeug in der mit P bezeichneten Parkstellung und in der mit N bezeichneten Neutralstellung blockiert ist und erst durch das Niedertreten des Bremspedals freigegeben wird. Dazu sind in Fahrzeugen mehrerer Hersteller Elektromagneten mit einem Sperrbolzen eingebaut. Dieser Sperrbolzen ist quer zur Bewegungsrichtung des Wählhebels in der Wählgasse beweglich und greift in den Schaltstellungen P und N in Querbohrungen des Wählhebels ein. Beim Niedertreten des Bremspedals wird der Sperrbolzen durch Aktivierung des Elektromagneten aus der Querbohrung herausgezogen.
Eine derartige Lösung ist in DE - OS 36 17 256 beschrieben. Die in dieser Schrift vorgestellte Betätigungsvorrichtung umfaßt eine Wähleinrichtung zur Anwahl der einzelnen Gangstufen des automatischen Kraftfahrzeuggetriebes, mit einem Wählhebel und einem mit diesem verbundenen Zwischenhebel, der über zwei Druckfedern in einer Mittelstellung gehalten ist.
Der Zwischenhebel ist über ein Gestänge mit dem Kraftfahrzeuggetriebe verbunden. An dem Bremspedal des Kraftfahrzeuges ist darüber hinaus ein elektrischer Unterbrecherschalter vorgesehen, der in der zuvor beschriebenen Weise einen Elektromagneten betätigt. Dieser Elektromagnet weist als Anker einen verschiebbaren Stift auf, der in einen, der in den Zwischenhebel eingebrachten Durchbrüche eingreift und somit als Sperre des Wählhebels wirkt. Alternativ wird in der Schrift ebenfalls vorgeschlagen, die Sperre direkt an dem Wählhebel angreifen zu lassen. Der Motor des Kraftfahrzeuges kann nur in den Wählhebelstellungen P und N gestartet werden. Bei abgeschaltetem Motor und nicht betätigtem Bremspedal ist der Elektromagnet stromlos und sperrt somit den Wählhebel. Bei gestartetem Motor und betätigtem Bremspedal werden die Kontakte des Unterbrecherschalters geschlossen. Die Wicklung des Elektromagneten wird mit Strom beaufschlagt, sodaß der Stift in das Elektromagnetgehäuse eingezogen wird und somit die Sperrung des Wählhebels freigibt. Diese bekannte Vorrichtung ist formschlüssig wirksam.
Bei einer derartigen Lösung ist nachteilig, daß sich nach dem Lösen der Bremse und dem damit verbundenen Öffnen des Unterbrecherschalters, der als Stift ausgebildete Anker des Elektromagneten wieder gegen den Zwischenhebel bewegt, weil der Elektromagnet stromlos wird. Da die Position des Stiftes nicht mehr mit der Position eines Durchbruches übereinstimmt, kann zwar der Wählhebel nicht gesperrt werden, jedoch gleitet der Stift des Elektromagneten permanent an dem Zwischenhebel beziehungsweise direkt an dem Wählhebel. Infolge des damit verbundenen Reibungswiderstandes ist der Wählhebel schwergängig. Darüber hinaus ist eine unerwünschte Geräuschentwicklung sowie ein Abrieb zwischen den Bauteilen nicht zu verhindern.

Zur Komfortverbesserung und um dem Fahrzeugführer die einzelnen Schaltstellungen deutlich spürbar zu machen, wird außerdem eine Rastierung des Schalthebels nicht nur in den bereits erwähnten Schaltstellungen P und N, sondern auch in der dem Fahrbetrieb in der Rückwärtsfahrt zugeordneten Schaltstellung R und den der Vorwärtsfahrt zugeordneten Schaltstellungen D, 3, 2 bei Vierganggetrieben oder D, 4, 3, 2 bei Fünfganggetrieben in DE - OS 36 17 256 vorgestellt, die vorliegend aus in axialer Richtung verschiebbaren, federbelasteten Rasten am Wählhebel besteht. Diese Rasten greifen in eine Rastschiene mit entsprechenden Vertiefungen ein.

Der Erfindung liegt das technische Problem der Integration der Blockierung der Schaltstellungen P und N und der Rastierung aller Schaltstellungen des Wählhebels eines automatischen Getriebes in einem Kraftfahrzeug zugrunde. Dabei soll eine kostengünstige Lösung geschaffen werden, die mit weniger Bauteilen auskommt, als bisher bekannte Vorrichtungen.

Die Erfindung löst dieses Problem mit den kennzeichnenden Merkmalen des Patentanspruches 1.

Eine erfindungsgemäße Vorrichtung zur Blockierung des Wählhebels wird vorwiegend bei Schaltvorrichtungen in Kraftfahrzeugen mit automatischen Getrieben eingesetzt. Bei derartigen Automatikschaltvorrichtungen wird zwischen Fahrstufen und Schaltstellungen unterschieden. Bei eingelegter Fahrstufe kann das Kraftfahrzeug fortbewegt werden. Schaltstellungen sind Neutralstellungen, in denen Motor und Getriebe nicht miteinander in Verbindung stehen. Diese Schaltstellungen werden mit P oder N bezeichnet.
Eine erfindungsgemäße Schaltvorrichtung besteht aus einem Gehäuse, in dem ein Wählhebel um eine Wählachse verschwenkbar ist. Der Wählhebel weist eine Verbindung zu dem automatischen Getriebe des Kraftfahrzeuges auf, die beispielsweise aus einem Gestänge oder einem Seilzug bestehen kann.
Der Wählhebel ist erfindungsgemäß mit einem Segment versehen, in dessen Umfang Rastierungen eingearbeitet sind, wobei der Mittelpunkt des Segmentes auf der Wählachse des Wählhebels liegt. Die Position der Rastierungen am Wählhebel entspricht dabei den jeweiligen Fahrstufen. In die Rastierungen greift ein federbelasteter Sperrhebel mit einem daran angebrachten Sperrglied ein. Die Rastierungen an dem Segment des Wählhebels sind so ausgeführt, daß der Wählhebel entgegen der Federkraft spürbar rastend um die Wählachse verschwenkt werden kann, sodaß dem Fahrzeugführer ein Fahrstufenwechsel möglich ist.
Für die Arrettierung des Wählhebels in den Schaltstellungen P und N sorgt bei abgeschalteter Zündung in an sich bekannter Weise eine mechanische Verriegelung. Diese ist in der Regel mit dem Zündschloß verbunden, sodaß bei in das Zündschloß eingeführtem Zündschlüssel dieser bei seiner Betätigung (Drehung) die mechanische Verriegelung löst. Als Verbindung zwischen dem Zündschloß und der mechanischen Verriegelung können beispielsweise Seilzüge dienen. Als mechanische Verriegelung kann ein einfaches, federbelastetes Blechsegment Verwendung finden.
Es bedarf wohl keiner besonderen Betonung, daß sich das Kraftfahrzeug nur starten läßt, wenn eine der Schaltstellungen P oder N eingelegt ist.

Eine erfindungsgemäße Vorrichtung zur Blockierung des Wählhebels in einem Kraftfahrzeug mit automatischem Getriebe weist ferner einen Elektromagneten auf. Der Anker dieses Elektromagneten bildet die Verbindung zwischen der Feder und dem Sperrhebel mit dem daran angebrachten Sperrglied.
Die den Schaltstellungen P und N zugeordneten Rastierungen werden am Umfang des mit dem Wählhebel verbundenen Segments etwas tiefer ausgebildet als die den Fahrstellungen zugeordneten Rastierungen. Dadurch wird das Sperrglied in den Rastierungen der Schaltstellungen P und N durch die Federwirkung etwas tiefer eingedrückt.
Bei abgeschalteter Zündung ist der Elektromagnet stromlos. Die mechanische Verriegelung übernimmt die Sperrfunktion des Wählhebels in den vorgegebenen Schaltstellungen P und N.
Wird die Zündung eingeschaltet, so erfolgt ein Stromdurchfluss durch den Elektromagneten nur dann, wenn das Bremspedal nicht betätigt ist und sich der Wählhebel in einer der Schaltstellungen P oder N befindet. Durch die Stromzufuhr wird der Anker des Elektromagneten bereichsweise in Richtung der auf den Sperrhebel wirkenden Feder aus dem ihn aufnehmenden Spulenkörper herausgeführt, sodaß sich die Kräfte der Feder und des aktivierten Elektromagneten addieren. Er ist also in der gleichen Richtung wirksam, wie die Feder.
Sodann wird die mechanische Verriegelung gelöst, sodaß der Elektromagnet zunächst deren Funktion übernimmt. Aus Sicherheitsgründen darf die mechanische Verriegelung natürlich zeitlich erst nach der Aktivierung des Elektromagneten gelöst werden.

Durch die zusätzliche Federbelastung ist nur eine geringe Haltekraft des Magneten nötig, um das Sperrglied in den Rastierungen P und N hinreichend zu arrettieren. Durch diese gegenüber herkömmlichen Ausbildungen wesentlich geringeren Haltekräfte des Magneten können wesentlich kleinere und somit billigere Elektromagneten zur Anwendung kommen, wodurch der Preis des Elektromagneten erheblich reduziert wird.
Betätigt der Fahrzeugführer das Bremspedal, so erfolgt dadurch eine Unterbrechung der Stromzufuhr zu dem Elektromagneten, sodaß dessen Anker in seine Ausgangslage zurückgeführt wird und nur noch die Federkraft auf den Sperrhebel wirkt. Der Fahrzeugführer kann unter Überwindung dieser Federkraft nunmehr aus der Position P oder N heraus eine Fahrstufe anwählen.

Die dazu erforderliche Kraft des Fahrzeugführers am Wählhebel ist in den Schaltstellungen P und N geringfügig größer als bei einer Bewegung aus der einer Fahrstufe zugeordneten Rastierung heraus, so daß der Fahrzeugführer dies spürt. Solange der Wählhebel sich nicht in einer der Schaltstellungen P oder N befindet, bleibt der Elektromagnet stromlos.

Eine erfindungsgemäße Vorrichtung zur Blockierung des Wählhebels in einem Kraftfahrzeug mit automatischem Getriebe ist kostengünstig herstellbar und zeigt sich in der Wirkung gegenüber bekannten Ausbildungen verbessert. Sie besteht aus wenigen, schwach belasteten Einzelteilen und kann dadurch platzsparend untergebracht werden.

Diese Anordnung eliminiert die Schaltgeräusche des Magneten, weil zwischem dem Magnetanker, dem Sperrhebel und dem Wählhebel kein freies Spiel vorhanden ist und deshalb auch keine schlagartigen Berührungen entstehen können.

Es ist ein weiterer Vorteil dieser Anordnung, daß beim Betätigen des Bremspedales der Wählhebel immer freigegeben wird. Dies ist bei den formschlüssigen, bekannten Lösungen oft nicht der Fall und zwar dann, wenn der Fahrzeugführer den Wählhebel betätigt, während er die Bremse tritt, sodaß dadurch der Arretierbolzen des Elektromagneten geklemmt wird.

In der Zeichnung ist ein konkretes Ausführungsbeispiel dargestellt.
Es zeigt:

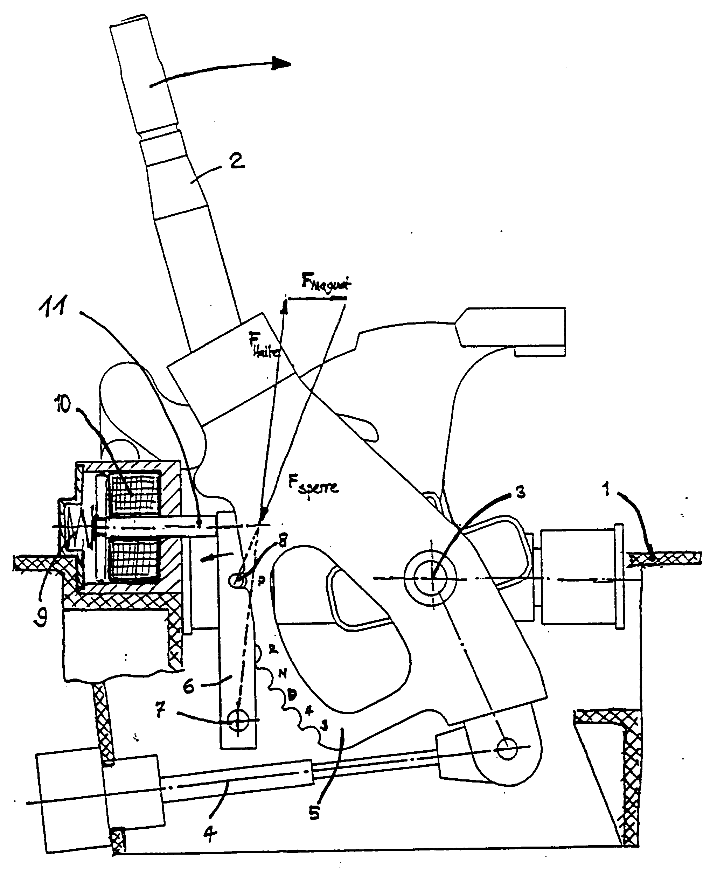

**Figur 1**: eine Seitenansicht des Wählhebels und einen in Fahrzeuglängsrichtung liegenden Schnitt durch das die Schaltvorrichtung aufnehmende Gehäuse.

Bei abgeschalteter Zündung ist der Elektromagnet stromlos. Für die Arrettierung des Wählhebels in den Schaltstellungen P und N sorgt dann in an sich bekannter Weise eine in der Figur 1 nicht dargestellte mechanische Verriegelung. Diese ist bei der Ausführung nach Figur 1 mit dem Zündschloß verbunden, sodaß bei eingeführtem Zündschlüssel dieser bei seiner Betätigung die mechanische Verriegelung löst. Als Verbindung zwischen dem Zündschloß und der mechanischen Verriegelung wird ein Seilzug verwendet. Als mechanische Verriegelung dient ein federbelastetes Blechsegment.
An Stelle der mechanischen Verriegelung wird während des Einschaltens der Zündung der Elektromagnet 10 wirksam, wenn sich der Wählhebel in einer der Schaltstellungen P oder N befindet. Es bedarf wohl keiner besonderen Betonung, daß sich das Kraftfahrzeug ohnehin nur starten läßt, wenn eine dieser Schaltstellungen eingelegt ist.
In dem die Schaltung aufnehmenden Gehäuse 1 ist der Wählhebel 2 für die Schaltung eines automatischen Getriebes in einem Kraftfahrzeug um die Wählachse 3 in einer Wählebene schwenkbar gelagert. Das untere Ende des hier als Doppelhebel ausgebildeten Wählhebels 2 ist durch einen Seilzug 4 mit der Getriebeschaltwelle oder dergleichen verbunden. In Übereinstimmung mit herkömmlichen Bezeichnungen der einzelnen Schaltstufen des automatischen Getriebes sind jeder Schaltstufe P, R, N, D, 4, 3 und 2 Rastierungen zugeordnet, die entsprechend dieser Zuordnung in der Zeichnung bezeichnet sind. Die Rastierungen sind an einem Segment 5 des Wählhebels 2 ausgebildet, dessen Mittelpunkt in der Wählachse 3 liegt. Die Rastierungen der Schaltstellungen P und N sind gegenüber den Rastierungen der Fahrstufen im Fahrbetrieb tiefer ausgeführt. In dem Gehäuse 1 ist außerdem ein Sperrhebel 6 um eine Gelenkachse 7 beweglich gelagert, die parallel zur Wählachse 3 ausgerichtet ist. An diesem Sperrhebel 6 ist ein Sperrglied 8 vorgesehen, welches radial in eine der Rastierungen des Segments 5 eingeschwenkt werden kann. In Richtung dieser Einschwenkbewegung ist der Sperrhebel 6 durch eine Feder 9 belastet, die vorliegend eine Schraubenfeder ist, durch deren Auslegung die Eindrückkraft des Sperrgliedes 8 in die Rastierungen des Segmentes 5 bestimmt werden kann. In Richtung der Feder 9 wirkt außerdem nachdem die Zündung eingeschaltet wurde ein Elektromagnet 10, der nur in den Schaltstellungen P und N und nur bei nicht betätigtem Bremspedal aktiviert ist. Der Elektromagnet 10 belastet das Sperrglied 8 zusätzlich. Im Ausführungsbeispiel wirkt der Anker 11 des Elektromagneten 10 mit einem daran angeformten Zapfen gegen das freie Ende des Sperrhebels 6, wobei die Feder 9 ihrerseits gegen den Anker des Elektromagneten 10 wirksam ist. Durch das Niedertreten des Bremspedals wird der Elektromagnet 10 stromlos, so daß der Wählhebel 2 unter ausschließlicher Überwindung der sich aus der Federkraft ergebenden Belastung des Sperrgliedes 8 aus der rastierten Schaltlage herausbewegt werden kann. Das schematisch eingezeichnete Kräftediagramm verdeutlicht die geringen Kräfte des Elektromagneten 10, die für die Blockierung des Wählhebels in den Schaltstellungen P und N erforderlich sind. Anstelle des erläuterten Elektromagneten kann auch ein einfacher Haftmagnet als ferngesteuertes Sperrelement Verwendung finden.

### BEZUGSZEICHENLISTE:

- 1: Gehäuse
- 2: Wählhebel
- 3: Wählachse
- 4: Seilzug
- 5: Segment
- 6: Sperrhebel
- 7: Gelenkachse
- 8: Sperrglied
- 9: Schraubenfeder
- 10: Elektromagnet
- 11: Anker

## Patentansprüche

1. Vorrichtung zur Blockierung des Wählhebels (2) in einem Kraftfahrzeug mit automatischem Getriebe, bestehend aus:
- einer mechanischen Verriegelung, die nur bei nicht eingeschalteter Zündung wirksam ist,
- einem Elektromagneten (10), der durch Niedertreten eines Bremspedals betätigbar ist,
- einem Sperrglied (8) für den in einem Gehäuse um eine Wählachse (3) beweglichen Wählhebel (2), das den Wählhebel in wenigstens einer Schaltstellung sperrt und
- Rastierungen für den Wählhebel in den den Fahrstufen zugeordneten Schaltstellungen, dadurch gekennzeichnet, daß
die Rastierungen (P, R, N, D, usw.) an dem Wählhebel (2) am Umfang eines Segmentes (5) mit einem in der Wählachse (3) liegenden Mittelpunkt ausgebildet sind und daß das Sperrglied (8) an einem Sperrhebel (6) angeordnet ist, der in dem Gehäuse (1) achsparallel zur Wählachse (3) schwenkbar gelagert, durch Wirkung einer Feder (9) mit dem Sperrglied (8) gegen die Rastierungen in dem Segment (5) und in den Schaltstellungen (P) und (N) zusätzlich durch einen in gleicher Richtung wirksamen Elektromagneten (10) belastet ist.

2. Vorrichtung nach Anspruch 1, dadurch gekennzeichnet, daß die den Schaltstellungen (P) und (N) zugeordneten Rastierungen radial tiefer ausgebildet sind als die den übrigen Schaltstellungen zugeordneten Rastierungen.

3. Vorrichtung nach Anspruch 1 oder 2, dadurch gekennzeichnet, daß das an dem Sperrhebel (6) angeordnete Sperrglied (8) sich bei der Schwenkbewegung des Sperrhebels (6) um seine Gelenkachse (7) etwa radial zur Wählachse (3) bewegt.

4. Vorrichtung nach Anspruch 3, dadurch gekennzeichnet, daß der Elektromagnet (10) radial zur Wählachse (3) wirksam angeordnet ist.

5. Vorrichtung nach einem der Ansprüche 1 bis 4, dadurch gekennzeichnet, daß die Feder (9) und der aktivierte Elektromagnet (10) in gleicher Richtung radial gegen das mit den Rastierungen versehene Segment (5) wirksam sind.

6. Vorrichtung nach einem der Ansprüche 1 bis 5, dadurch gekennzeichnet, daß anstelle eines Elektromagneten ein einfacher Haftmagnet ein ferngesteuertes Sperrelement bildet.

## Claims

1. A device for blocking the selector lever (2) in a motor vehicle with automatic transmission, comprising:
- a mechanical locking system, which is only effective when the ignition is switched on,
- an electromagnet (10), which can be actuated by pressing down a brake pedal,
- a locking member (8) for the selector lever (2) movable in a housing about a selector axis (3), which locking member locks the selector lever in at least one switching position and
- notches for the selector lever in the switching positions associated with the speed gears, characterised in that
- notches (P, R, N, D, etc.) are formed on the selector lever (2) on the circumference of a segment (5) with a centre point lying in the selector axis (3) and the locking member (8) is arranged on a locking lever (6), which is pivotally mounted in the housing (1) axially parallel to the selector axis (3), is loaded by the action of a spring (9) with the locking member (8) towards the notches in the segment (5) and into the switching positions (P) and (N) additionally by an electromagnet (10) acting in the same direction.

2. A device according to claim 1, characterised in that the notches associated with the switching positions (P) and (N) are radially deeper than the notches associated with the other switching positions.

3. A device according to claim 1 or 2, characterised in that the locking member (8) arranged on the locking lever (6) moves approximately radially towards the selector axis (3) during the pivoting movement of the locking lever (6) about its hinge axis (7).

4. A device according to claim 3, characterised in that the electromagnet (10) is arranged so as to act radially towards the selector axis (3).

5. A device according to one of claims 1 to 4, characterised in that the spring (9) and the activated electromagnet (10) act in the same direction radially towards the segment (5) provided with the notches.

6. A device according to one of claims 1 to 5, characterised in that, in place of an electromagnet, a simple holding magnet forms a remote-controlled locking element.

## Revendications

1. Dispositif pour le blocage du levier sélecteur (2) dans un véhicule automobile à boîte de vitesse automatique, comprenant :
- un enclenchement mécanique qui n'agit que lorsque le contact est mis,
- un électro-aimant (10) qui peut être actionné par l'enfoncement d'une pédale de frein,
- un organe de verrouillage (8) pour le levier sélecteur (2) qui peut se déplacer autour d'un axe de sélection (3) dans un carter, et qui verrouille le levier sélecteur dans au moins une position de commande et
- des crans pour le levier sélecteur prévu dans les positions de commande correspondant aux gammes de marche,
caractérisé en ce que :
les crans (P, R, N, D, etc.) sont réalisés sur le levier sélecteur (2) à la périphérie d'un secteur (5) possédant un centre situé sur l'axe de sélection (3), et en ce que l'organe de verrouillage (8) est agencé sur un levier de verrouillage (6) qui est monté oscillant dans le carter (1) avec son axe parallèle à l'axe de sélection (3), et qui est chargé par l'action d'un ressort (9), avec l'organe de verrouillage (8) contre les crans du secteur (5) et qui, dans les positions de commande (P) et (N), est chargé en supplément par un électro-aimant (10) qui agit dans le même sens.

2. Dispositif selon la revendication 1, caractérisé en ce que les crans correspondant aux positions de commande (P) et (N) sont d'une plus grande profondeur radiale que les crans correspondant aux autres positions de commande.

3. Dispositif selon la revendication 1 ou 2, caractérisé en ce que, lors du mouvement de pivotement du levier de verrouillage (6) autour de son axe d'articulation (7), l'organe de verrouillage (8) agencé sur le levier de verrouillage (6) se déplace à peu près radialement par rapport à l'axe de sélection (3).

4. Dispositif selon la revendication 3, caractérisé en ce que l'électro-aimant (10) est agencé pour agir dans une direction radiale par rapport à l'axe de sélection (3).

5. Dispositif selon une des revendications 1 à 4, caractérisé en ce que le ressort (9) et l'électro-aimant (10) excité agissent dans le même sens, dans une direction radiale vers le secteur (5) muni des crans.

6. Dispositif selon une des revendications 1 à 5, caractérisé en ce qu'en remplacement de l'électro-aimant, un simple aimant de retenue forme un élément de verrouillage télécommandé.
